# EUROPEAN PATENT SPECIFICATION

(11) **EP 3 414 521 B1**
(45) Date of publication and mention of the grant of the patent: **27.11.2019**
(21) Application number: 17705765.0
(22) Date of filing: 08.02.2017
(51) Int. Cl.: G01B 21/04

(54) **INTEGRATED MEASURING AND ADDITIVE MANUFACTURING SYSTEM AND METHOD**
SYSTEM UND VERFAHREN ZUR INTEGRIERTEN MESSUNG UND ADDITIVEN FERTIGUNG
SYSTÈME ET PROCÉDÉ INTÉGRÉS DE MESURE ET DE FABRICATION ADDITIVE

(30) Priority: 11.02.2016 US 201662293940 P
(43) Date of publication of application: 19.12.2018
(73) Proprietor: Hexagon Metrology, Inc, North Kingstown, Rhode Island 02852 (US)
(72) Inventor: FETTER, William, North Kingstown Rhode Island 02852 (US); CREUZER, Michael, North Kingstown Rhode Island 02852 (US)
(74) Representative: Kaminski Harmann
(86) International application number: PCT/US2017/016937
(87) International publication number: WO 2017/139332

(56) References cited:
- US-A1- 2007 228 592
- US-A1- 2015 061 170
- US-A1- 2015 174 828

## Description

### PRIORITY

This patent application claims priority from provisional United States patent application number 62/293,940, filed February 11, 2016, entitled, **"INTEGRATED MEASURING AND ADDITIVE MANUFACTURING APPARATUS AND METHOD,"** and naming William Fetter and Michael Creuzer as inventors.

### FIELD OF THE INVENTION

The invention generally relates to manufacturing objects and, more particularly, the invention relates to integrating object measurement with object manufacture.

### BACKGROUND OF THE INVENTION

Manufactured objects are produced using a wide variety of technologies. One longstanding technique machines a part, removing portions from a substrate or other piece of material (e.g., a metal gear). Injection molding, another widely used manufacturing technique, typically cures molten plastic within a mold. Another newer technique, known as three-dimensional printing, additive printing, or additive manufacturing ("3D printing"), produces an object by depositing (e.g., spraying) one or more successive layers of material onto a base or platform. For example, a 3D printer can produce a smartphone case from a plurality of successively deposited plastic layers. As another example, additive printing may extrude material (i.e., "extrusions") onto a base, platform, or prior extruded material.

To confirm it meets its design requirements, the object often is measured after it is manufactured. For example, a measuring device, such as a coordinate measuring machine ("CMM"), may measure various prescribed distances within the noted smartphone case. If the case is too small, it may not be able to receive its internal electronic components (e.g., printed circuit boards, batteries, etc.). Accordingly, as the smartphone case highlights, if a manufactured object is not the right size, it often is discarded because it cannot meet its design requirements. Undesirably, this problem can happen for large runs of manufactured objects, causing significant loss and delaying ultimate product delivery to customers. Methods and systems for producing 3D objects from an extrusion of material are known from eg. US 2015/0174828 A1, US 2007/0228592 A1 and US 2015/0061170 A1.

### SUMMARY OF THE INVENTION

In accordance with one embodiment of the invention, a method of producing a three-dimensional object from an extrusion of material forms uses a movable portion of an additive extrusion printing device to form at least one line of material. The printing device preferably extrudes the material as a function of a nominal model having a specification of the object. The method also measures, using a coordinate measuring machine, at least one dimension of the line of material during the extrusion process of the line of material. During or after measuring, the method checks, using a checker operatively coupled with the coordinate measuring machine, the dimensional accuracy of at least one dimension of the line of material by comparing the at least one dimension with at least one specification of the nominal model of the object.

The method alters subsequent extrusion of the line of material by the movable portion of the additive extrusion printing device as a function of the dimensional accuracy of the at least one measured dimension. To that end, the method controls the additive extrusion printing device to change an extrusion parameter of the line of material. Among other things, the extrusion parameter may include at least one of the trajectory of the movable portion, the velocity of the movable portion, the velocity the material extrudes from the movable portion, and at least one dimension of the line of material. The exact features of the claimed method are defined in appended claim 1.

The coordinate measuring machine preferably includes a measurement modality with at least one of a structured white light, a fiber optic probe, a laser scanner, and/or an analog scanner. This measurement modality may be functionally independent of the additive extrusion printing device. Regardless of their independence, the coordinate measuring machine and measurement modality may share a base.

The additive extrusion printing device may include a 3D printer. When altering the line of material, the method may alter subsequent extrusion of the line of material when the at least one measured dimension produces an error exceeding a prescribed threshold. The object produced by the printing device may take on any of a number of shapes and sizes. For example, the object may have a plurality of vertices and a plurality of lines connecting those vertices (e.g., a wireframe device)

As an extrusion process, the line of material includes an extrudate output of a material forced through an extrusion die in the additive extrusion printing process. The line of material may be generally straight, or not straight. In some embodiments, the additive extrusion printing device is configured to extrude the line of material on another line of material formed by an earlier extrusion.

In accordance with another embodiment of the invention, a system for producing a three-dimensional object from an extrusion of material has an additive extrusion printing device with a movable portion configured to form at least one line of material, and a coordinate measuring machine configured to measure at least one dimension of the line of material during the extrusion process of the line of material. The additive extrusion printing device is configured to extrude as a function of a nominal model having a specification of the object.

The system also has a checker operatively coupled with the coordinate measuring machine. The checker is configured to check the dimensional accuracy of at least one dimension of the line of material by comparing the at least one dimension with at least one specification of the nominal model of the object. The checker also is configured to alter subsequent extrusion of the line of material, by the movable portion of the additive extrusion printing device, as a function of the dimensional accuracy of the at least one measured dimension of the line. To that end, the checker is configured to alter subsequent extrusion of the line by controlling the additive extrusion printing device to change an extrusion parameter of the line of material. Among other things, the extrusion parameter may include at least one of the trajectory of the movable portion, the velocity of the movable portion, the velocity the material extrudes from the movable portion, and at least one dimension of the line of material. The exact features of the claimed system are defined in appended claim 7.

Illustrative embodiments of the invention are implemented as a computer program product having a computer usable medium with computer readable program code thereon. The computer readable code may be read and utilized by a computer system in accordance with conventional processes. The exact features of the claimed computer program product are defined in appended claim 11.

### BRIEF DESCRIPTION OF THE DRAWINGS

Those skilled in the art should more fully appreciate advantages of various embodiments of the invention from the following "Description of Illustrative Embodiments," discussed with reference to the drawings summarized immediately below.
Figure 1 schematically shows an additive printing device having measuring capability in accordance with illustrative embodiments of the invention.
Figures 2A and 2B schematically show two examples of wireframe objects produced using extrusion printing process.
Figure 3 schematically shows logic for managing the printing process in accordance with illustrative embodiments of the invention.
Figure 4 shows a process of measuring an object during the 3-D printing process in accordance with illustrative embodiments of the invention.

### DESCRIPTION OF ILLUSTRATIVE EMBODIMENTS

In illustrative embodiments, a system for producing an object has integrated measurement capability for precisely measuring the object as it is being printed by means of integrated additive printing technology. Among other things, the system may incorporate a conventional extrusion additive printing device, while the measuring capability may incorporate a coordinate measuring machine ("CMM") for measuring the object as it is printed.

Accordingly, the system may measure the object during the printing process - there is no need to wait for the printing process to fully produce the object. If the system identifies an error in the size or shape of the object before it is fully produced, then the apparatus may 1) adjust the process "on-the-fly" (e.g., deviate from the requirements of a prescribed virtual model) to produce a more geometrically/ dimensionally accurate object, or 2) discard the object without wasting any further time on the geometrically/dimensionally defective object. Details of illustrative embodiments are discussed below.

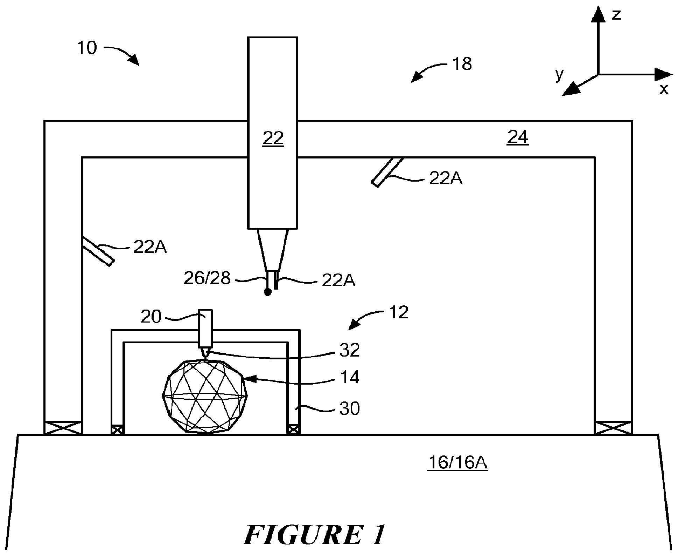

Figure 1 schematically shows a combination system 10 having measuring and additive printing capability configured in accordance with illustrative embodiments of the invention. More specifically, the system 10 has a single platform 16 supporting both an additive printing device 12 and a measuring device 18, which, in illustrative embodiments, is a CMM (also identified by reference number "18").

As known by those skilled in the art, the additive printing device 12 can produce an object by depositing one or more successive layers of material onto a base or platform 16. In illustrative embodiments, the material is deposited in the form of an extrusion from a nozzle of the additive printing device 12. The extrudate (i.e., the material extruded) eventually cures into the noted object.

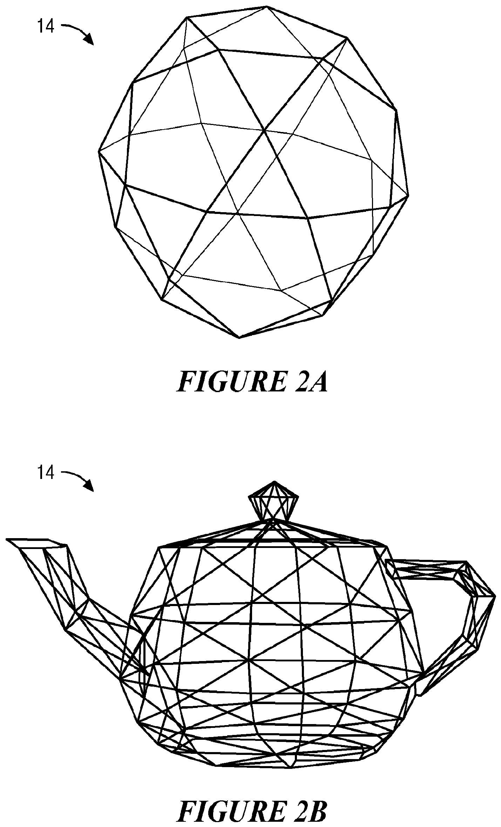

Some embodiments extrude layers on top of earlier formed layers, as is commonly done in conventional layer-based additive printing processes. As another example, the extrudate may be extruded in free-space (other than a small base support) to form a wireframe or object having a structure resembling a spider web or the Eiffel Tower. In those cases, other than contacting a vertex of the object, the extrusion forms a line of material that is largely unsupported by another layer. Figures 2A and 2B schematically show examples of such objects (identified by reference number "14"), which, in this example, are wireframe objects. Specifically, Figure 2A schematically shows a simple wireframe ball having only lines/wires between nodes/vertices, and open spaces between the lines. In a similar manner, Figure 2B schematically shows a wireframe teapot. Illustrative embodiments form these objects so that their lines are formed from lines of extruded material, such as resin, metal, and/or a polymer. Indeed, those skilled in the art can apply various embodiments to non-extruded objects, and those that are not formed as a wireframe (vertices and lines).

As such, an additive printing device 12 may extrude or otherwise emit a single, thick or thin extrusion/ extrudate of material in three-dimensional free space. This extrusion may be considered to be a "line of material." Specifically, as known by those in the art, this line of material essentially is the extrudate output of a material forced through an extrusion die in the additive extrusion printing process. The line of material generally takes on the geometric and dimensional characteristics of the die. For example, if the die has a flat opening, then the line of material will be general flat. As another example, if the die has a round or star-shaped opening, then the line of material will be generally round or star-shaped patterned, respectively. Among other types, the extrusion process may be a cold, warm, or hot extrusion process. This is distinct from a process that deposits material using a different technique, such as a spray, stereolithography, laser melting, laser sintering, or similar deposition technique.

During extrusion, a base, a prior extruded material/portion (e.g., a vertex of an object), or other structure (e.g., a string suspended between two points) may support much of or only a small portion of the object. To that end, the additive printing device 12 has a print head 32 (discussed below) that is movable in three-dimensional space. Optionally, after it is formed, the wireframe object can be immersed in a material that fills in its openings to form the outer skin of a final object. For the examples of Figures 2A and 2B, the completed wireframes may be immersed in a polymeric or resin material to respectively form a ball and a teapot.

To those ends, the combination system 10 shown in Figure 1 includes the platform 16 supporting an object 14 being printed, and mechanisms for printing and measuring the object 14 as it is being produced (e.g., the additive printing device 12 and CMM 18 noted above). More specifically, the platform 16 may include a support structure 16A for supporting and manipulating any of a wide variety of additive printing and measuring technologies. For example, the support structure 16A may include a substantially planar granite slab that supports a pair of separate/independent guide structures for respectively guiding a printing arm 20 and CMM arm 22. Specifically, as shown in Figure 1, the combination system 10 has a CMM guide structure 24 for supporting the movable CMM arm 22 carrying a measurement modality 26, such as a measurement head. The measurement head can accept any of a variety of tools/tips 28, such as those for tactile and/or non-tactile measurement (e.g., laser or camera(s). Details of some such tools 28 are discussed below.

Like many conventional CMMs, the CMM guide structure 24 has tracks that enable the movable CMM arm 22 to move in a very precise manner in multiple directions. For example, from the perspective of the combination system 10 of Figure 1, the CMM guide structure 24 enables the CMM arm 22 to move in one or more of the X-direction, Y-direction, and the Z-direction. In addition or alternatively, the CMM arm 22, or portions of it, also may have other degrees of freedom, such as the ability to roll, pitch, or yaw (e.g., using a wrist structure with the measurement head/measuring modality 26. The CMM arm 22 thus may have many degrees of freedom (e.g., six degrees of freedom) relative to the object 14. With this flexibility of movement, the CMM arm 22 can measure the dimensions, position, and/or curvature of part or the entire object 14.

In a manner similar to the CMM 18, the additive printing device 12 also has a guide structure (a "printing guide structure 30") for guiding the movable printing arm 20, which has the prior noted print head 32 for depositing material. In the example of Figures 2A and 2B, the print head 32 extrudes material to produce the object 14. From the perspective of the combination system 10 of Figure 1, the printing guide structure 30 enables the printing arm 20 to move in one or more of the X-direction, Y-direction, and the Z-direction while it extrudes material to form the object, or even when not extruding material. In addition or alternatively, the printing arm 20, or portions of it, also may have other related or unrelated degrees of freedom, such as the ability to roll, pitch, or yaw (e.g., using a wrist structure).

In illustrative embodiments, the CMM 18 measures the object 14 during the extrusion process-while the line of material is being extruded, such as between vertices. Importantly, as a specialized, well-known type of measuring device 18, the CMM 18 measures the object independently of the additive printing device 12-its measurement task is functionally independent of the additive printing device 12. Specifically, the CMM 18 does not rely on the additive printing device 12 to move the CMM arm 22, and also does not rely on any sensors supported by or otherwise part of the additive printing device 12. As such, the CMM 18 does not rely on sensors on components shared by the CMM 18 and printing device 12 (e.g., the support structure 16A). Accordingly, the CMM 18 can maintain its known functionality of making highly accurate measurements (e.g., to the micrometer) within its predefined coordinate system. In other words, the CMM 18 can completely perform its primary measurement function without using the additive printing device 12. As such, the measurement modality 26 is on a different movable apparatus than that of the print head (discussed below).

The example of Figure 1 may be considered to integrate the additive printing device 12 into the CMM 18 because the CMM 18 is the dominant device-it is larger. As such, the CMM 18 is retro-fitted to have the additive printing device 12 within its coordinate measurement system. Specifically, some embodiments can retrofit existing devices having only one of the two main functionalities discussed. A CMM 18 thus can be retrofitted with 3-D printing capabilities.

The retrofit of this embodiment enables both devices to share the same support structure 16A, although some embodiments may not have such a requirement. Other embodiments may be considered to integrate the CMM 18 into the additive printing device 12 if the additive printing device 12 is the dominant device. As such, a 3-D printer may be retrofitted with a CMM or other measurement apparatus. Despite integrating the CMM 18 into the additive printing device 12, or vice versa, the two devices 12 and 18 are considered to be independent devices that can operate independently of the other. Alternative embodiments, however, may share components (e.g., a movable arm carries both the print head and the measurement head).

As noted above, those skilled in the art can apply any of a number of different measurement technologies, either alone or in combination, to measure the object 14 during the printing process. Although one or more preferably are secured to the movable CMM arm 22 (Figure 1 shows two such devices on the CMM arm 22), those technologies may be in another location of the CMM 18, such as on a structure extending from the base. Among other things, those measurement technologies may include:
1. A structured white light,
2. A fiber-optic probe,
3. A laser scanner, or
4. A tactile sensor, such as an analog scanner.

Exemplary implementations of each of these technologies are discussed immediately below. It should be noted that those implementations are intended to be illustrative and not limit other embodiments of the invention.

### Structured White Light

As known by those skilled in the art, a structured white light sensor projects a random pattern on an object 14 and triggers a simultaneous capture of the area of interest by converged cameras. Figure 1 schematically shows converged cameras (identified by reference number 22A), although other numbers of cameras 22A should suffice. Preferred embodiments integrate these cameras 22A into the CMM 18 and not into the additive printing device 12.

Algorithms correlate the images of the cameras 22A to create a 3-D point cloud representation of the area. The white light sensor also acquires clear black- and-white images to accurately measure specific features, such as holes and edges. Illustrative embodiments use the structured white light sensor to feedback measurement data to the printer (e.g., via the point cloud), thus enabling in- process adjustments to the printing process (discussed below).

Those skilled in the art can use any of a number of different techniques to incorporate the white light sensor of the CMM 18 and 3-D printer 12 into a single system. Among others things, illustrative embodiments may use an adjustable field of view that can be scaled to the size of the object 14 being printed. In addition or alternatively, illustrative embodiments may use a fixed field of view equal to the size of the 3-D printing table/platform 16.

Moreover, the white light sensor may be mounted with a fixed or adjustable field of view to a six-degree of freedom articulated robot that is independent of the printing apparatus. Accordingly, this embodiment permits this white light sensor to be in any orientation relative to the object 14.

Some embodiments mount the white light sensor with a fixed or adjustable field of view on a printing arm 20 of the additive printing device 12. This embodiment, however, preferably mounts the white light sensor so that it is independent of the printer head 32. Conversely, other embodiments may mount the white light sensor with a fixed or adjustable field of view directly to the printer head 20.

### Fiber Optic Probe

Some embodiments use a point laser sensor that can operate by means of a laser point focused on the object 14 and transmitted via some conventional medium, such as, among other things, a fiber-optic channel. The camera 22A may measure the light of the laser reflected from the object 14.

In a manner similar to other discussed sensors, the point laser sensor may be implemented in a number of ways. For example, the fiber-optic probe sensor may be attached to the movable CMM arm 22, mounted to the locations identified as "22" in Figure 1, or mounted to a six degree of freedom articulated robot that is independent of the CMM arm 22. Alternatively, the fiber-optic probe sensor may be mounted on the printing arm 20 of the additive printing device 12 and independent of the CMM arm 22.

### Laser Scanning

Illustrative embodiments may incorporate a laser scanning sensor that operates by means of a triangulation principle, or a flying dot principle. The system 10 may create a 3-D point cloud using a camera to measure the laser light reflected from the object 14.

As with other discussed sensors, the laser scanning sensor may be implemented in a number of ways. For example, the laser scanning sensor may be attached to the CMM arm 22, mounted to the locations identified as "22" in Figure 1, or mounted to a six degree of freedom articulated robot that is independent of the CMM arm 22. Alternatively, the laser scanning sensor may be mounted on the printing arm 20. Moreover, the laser scanning sensor may be attached in a fixed position to the 3-D printer structure 12, such as the printer platform 16.

### Analog Scanning

Another embodiment may use a contact touch sensor (e.g., a tactile probe) that operates by physically contacting the object 14 with the tactile probe and recording point deviations on the surface of the object 14. Figure 1 shows a tactile probe on the CMM arm 22.

In a manner similar to other embodiments, the analog scanning sensor may be implemented in a number of ways. For example, the analog scanning sensor may be attached to the CMM arm 22, or mounted to a six degree of freedom articulated robot that is independent of the CMM arm 22. Alternatively, the analog scanning sensor may be mounted on the printer arm 20.

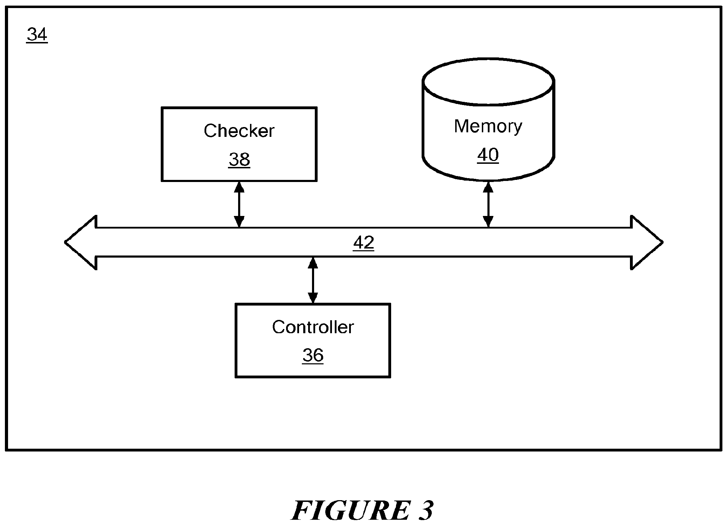

Figure 3 schematically shows illustrative logic 34 for managing the printing process in accordance with illustrative embodiments of the invention. This logic 34 can be directly integrated into the CMM 18 and/or printing device 12, or spaced apart from the CMM 18 and/or printing device 12. For example, this logic 34 may communicate with the additive printing device 12 through a local area network or a wide area network, such as the Internet.

The logic 34 includes a controller 36 configured to manage system processes (e.g., general printing and measuring processes), a checker 38 configured to determine whether measurements of the object 14 are within prescribed specifications, and memory 40 for storing data and processing code. For example, the memory 40 may store a dimensionally accurate computer-aided design model ("CAD model") of the object 14.

Accordingly, as discussed in greater detail below, the checker 38 checks the dimensions of the object 14 by comparing the measurements received from the measuring device 18 (e.g., in the form of a point cloud) against the dimensions in the CAD model to determine the dimensional accuracy of the object 14. Any of a number of different interconnection systems may connect these components together to perform their functions. For example, Figure 2 schematically shows a single bus acting as an interconnection system 42, although those skilled in the art may consider other interconnection systems appropriate for their particular application. Moreover, although Figure 2 shows only several functional components, this logic 34 may include a wide variety of additional components that can further assist with the required task. Moreover, the functions of the

Indeed, it should be noted that Figure 3 only schematically shows each of these components. Those skilled in the art should understand that each of these components can be implemented in a variety of conventional manners, such as by using hardware, software, or a combination of hardware and software, across one or more other functional components. For example, the checker 38 may be implemented using a plurality of microprocessors executing firmware. As another example, the checker 38 may be implemented using one or more application specific integrated circuits (i.e., "ASICs") and related software, or a combination of ASICs, discrete electronic components (e.g., transistors), and microprocessors. Accordingly, the representation of the checker 38 and other components in a single box of Figure 3 is for simplicity purposes only. In fact, in some embodiments, the logic 34 of Figure 3 is distributed across a plurality of different machines -not necessarily within the same housing or chassis.

It should be reiterated that the representation of Figure 3 is a significantly simplified representation of the actual logic 34. Those skilled in the art should understand that such a device has many other physical and functional components, such as central processing units, other elements, and short-term memory. Accordingly, this discussion is in no way intended to suggest that Figure 3 represents all of the elements of the logic 34.

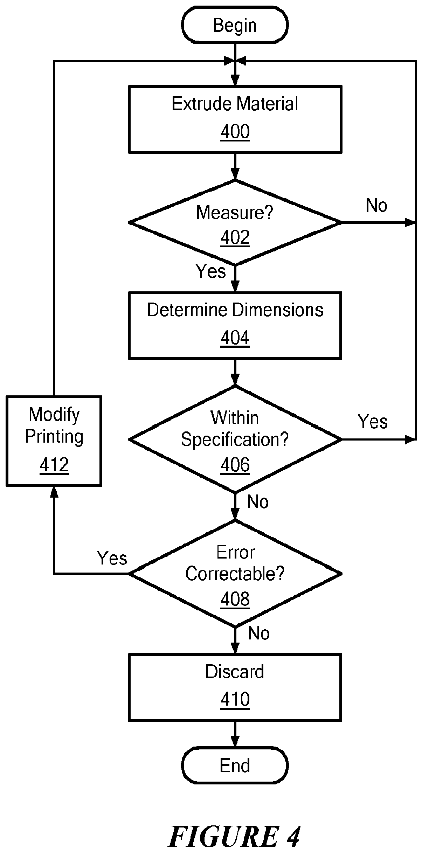

Figure 4 shows a process of measuring an object 14 during a printing process in accordance with illustrative embodiments of the invention. As known by those skilled in the art, a printing process using extrusion may apply a prescribed material in the requisite number of generally Z-directional layers (e.g., one or more layers from the perspective of Figure 1) to form the object 14. Alternatively, an extrusion 3D printing process may extrude material without generally Z-directional layers, such as a plurality of layers in the X or Y direction, as a single continuous extrusion, or on another material that was not extruded (e.g., a flange around a pipe). During the process, some embodiments permit some or all of the extrudate to cure at least a minimum amount of time. For example, the extrudate may cure so that: 1) it can be moved to a storage location without substantial damage, 2) more material may be added to the object 14 being formed, or 3) it may be measured with a tactile probe. The curing time can be minimal (e.g., <1 to 5 seconds), or take a longer time (1 to 5 minutes or longer).

In illustrative embodiments, after the object 14 is moved from its proximity to the system 10, the printing process is considered to have concluded. For example, if the object 14 is printed on the platform 16, then the printing process is considered to have concluded when the object 14 is removed from the platform 16. In other words, when the object 14 has been moved to a position so that the system 10 no longer can add material to the object 14, then the printing process is considered to have concluded. This typically is expected to happen after the object 14 has been manufactured and measured, as discussed below. Accordingly, measuring the object 14 using a downstream CMM device after the object 14 has been manufactured and moved from the system 10 is not within the scope of a plurality of embodiments of the invention. In short, various embodiments consider the printing process to conclude when the system 10 no longer adds material to the object 14. Adding further extrusions to a previously completed object 14, however, may be within the scope of various embodiments and can be applied by those skilled in the art.

It should be noted that this process is a simplified version of a more complex process of producing the object 14. As such, the actual process may have additional steps that are not discussed. In addition, some steps may be performed in a different order, or in parallel with each other. Accordingly, discussion of this process is illustrative and not intended to limit various embodiments of the invention. Moreover, although this process is discussed primarily with regard to producing a single object 14, the process of Figure 4 also can be used to produce more than one object 14. Indeed, rather than just printing a single object 14, those in the art can modify the process to form a plurality of objects 14 in a single production run or in parallel.

The system 10 can produce any of a number of different types of objects 14 amenable to additive printing processes. For example, the 3-D printing device 12 may produce a toy, such as a toy house or toy car, a household device, such as a chair or lamp, a part of a larger object 14, such as a car bumper or wheel, an industrial item, such as a gear or propeller, a medical related apparatus, such as a prosthetic, a food product, such as pizza, chocolate, or cake, clothing, a ball, a teapot, or any of a wide variety of other items. Accordingly, as suggested by this short list, the 3-D printing device 12 may form objects 14 from any of a variety of different materials or combinations of materials, such as plastics, resins, rubbers, metals, ceramics, food, silicon, or other known material conventionally used in additive printing/manufacturing processes, such as 3-D printing.

The process begins at step 400, in which the printer head 32 deposits material onto the platform 16 or some other structure (e.g., a scaffold or string). Specifically, as known by those skilled in the art, the printing device 12 in this embodiment forms the object 14 by extruding material in precisely prescribed manners-as required by a nominal model/CAD model of the object 14. This extrusion may proceed continuously during the rest of the process, or stop periodically until certain other steps are completed. Those skilled in the art can select the appropriate timing for this step based on the object 14 being produced. Accordingly, the additive printing device 12 may extrude material even when other steps are executed (e.g., measurement steps). Moreover, it also should be noted that although extrusion is discussed, alternative embodiments may apply to additive printing processes that deposit material without extrusion processes (e.g., those that spray the material in generally Z-directed layers).

The process then determines if it is to measure the object 14 in its current, unformed state (step 402). More specifically, the system 10 may be programmed to measure the object 14 at prescribed points in its production/extrusion process. These points may be based upon time, the amount of the object 14 that is completed, or any of a number of other factors. For example, this step may measure the object 14 (e.g., one or more lines of material extruded by the printing device 12) after each extruded line is deposited, after every other extruded line is deposited, after every third extruded line is deposited, etc., (or before certain other extrusions are formed). As another example, this step may measure the object 14 after a portion or fraction of every one or more features or extruded lines of material are formed (e.g., after every 2.35 extruded lines, the CMM 18 may measure the most recently formed line(s), or after certain prescribed features are formed).

Alternatively, some embodiments may measure the object 14 after some prescribed amount of time is passed since a previous measurement, since the beginning of the process, or after some other event has occurred (after a certain feature is measured and approved as accurate). For example, an object 14 expected to take three minutes to form may be measured at 45 second intervals after the first extrusion/line of material is formed. Alternative, non-extrusion based embodiments forming the object 14 using a single pass may take this approach, or after a pre-specified feature of the object 14 has been printed.

Rather than periodically taking measurements while extruding or not while extruding, some embodiments continuously measure the object 14 as it is being formed. This continuous measurement process may have a built-in lag time to enable the material to cure for a short time before it is measured. For example, this lag may be 2-5 seconds, 30 seconds, or longer. This embodiment alternatively may take measurements without a substantial lag time. Other embodiments may measure the extrudate as it is formed without lag time. One skilled in the art may take the measurement technology into account when deciding when to take measurements. For example, if using a tactile probe, one skilled in the art may permit some additional curing time. As another example, if using a non-contact probe or measuring device (e.g., a laser scanner), one skilled in the art may not require much curing time.

Accordingly, if no measurement is to be taken at this point, the process loops back to step 402 to continue depositing additional material. Conversely, if a measurement is to be taken, then the process continues to step 404, which determines one or more of the dimensions of the object 14/line(s) of material. This measurement may be taken while the printing device 12 extrudes a line of material, and/or while the printing device 12 pauses the printing process. In some embodiments, the CMM 18 obtains all major exposed dimensions (e.g., using a point cloud), while in other embodiments, the process obtains only a limited number of dimensions (e.g., using the analog scanner). For example, among other things, the CMM 18 can measure the length of a line of material, its width, and/or its distance to another previously formed line of material.

The process therefore uses one of the above noted CMM modalities for measuring features of some or all portions of the object 14. If the material is expected to exhibit a change in its geometry before it cures (e.g., it shrinks to some extent after deposited but before curing), then this step may be delayed until after it is fully or partially cured. Alternatively, the controller 36 may be configured to measure the uncured extrudate, which should shrink a known amount. In this manner, logic can take the anticipated shrinkage of the material (e.g., based on coefficient of thermal expansion and other material qualities) to determine the effective measurements. Alternatively, if the system 10 measures using an analog scanner, which physically contacts the growing object 14, then it may be most desirable to wait for the object 14 to cure (e.g., via convective or ambient cooling processes, or application of a curing light at a prescribed wavelength) before measuring.

Next, at step 406, the checker 38 determines if the measurement(s) are within prescribed specifications for the object 14. In other words, the checker 38 determines if the measured dimensions are within prescribed size range(s) and, if not, whether to modify the process. To that end, the checker 38 accesses the CAD model (or other object dimensional data or specification) within memory 40 to determine the specified dimensions of the object 14. For example, the CAD model may specify that a certain dimension should measure between a first and second size. Among other ways, if using a white light sensor or similar technology, the process may compare a point cloud, or some portion of the point cloud, to a corresponding portion of the CAD model in memory 40. Accordingly, a dimension outside of that specification (i.e., a deviation from that specified range) represents an error in the printing process.

If the measurements are within the measurement specifications (and the object 14 is not fully complete), then the process loops back to step 400 to continue extruding material and continue this loop.

If, however, the measurements are outside of the measurement specifications, then the controller 36 determines if the error is correctable for the current object 14 being produced (step 408). In other words, the process determines if the error is so great at this point in the process that a change to the process flow still would not be enough to cause the object 14 to have an acceptable amount of deviation. Accordingly, if the controller 36 determines that the object 14 is not correctable, then the process may simply discard the object 14 at step 410, and end the printing process. Alternatively, some embodiments may continue to print the object 14 despite the deviation. In that case, the process may suspend the measurement step and its related steps. As noted below, the controller 36 may responsively use modified parameters for printing additional objects 14 having the same design specifications.

Conversely, if the production process can be changed to produce a satisfactory object 14, then the controller 36 determines how best to deviate from the requirements specified by the CAD file to make an appropriate change at this point (step 412). For example, the controller 36 may gradually alter/change the angle/trajectory and/or velocity and/or acceleration of the print arm 20 for extruding a given line or a next line for the next several extrusions of the ball of Figure 2A until the side of the ball reaches an appropriate radius. As another example, the controller 36 may change a dimension of the line (e.g., extend the length of the next line to ensure that the overall length is within the requirements of the CAD file). As yet another example, the controller 36 may increase or decrease the velocity it extrudes the material from its print head 32.

If the object 14 is formed with a single extrusion (i.e., continuously extruding to produce the entire object 14), the controller 36 may complete the single extrusion with modified parameters to produce the overall object 14 closer to the design specifications than the printing device 12 otherwise would produce it without illustrative embodiments. This is similar to when the object 14 is formed with multiple extrusions. For example, the controller 36 may cause the printer head 32 to print one or more specific portions of the single extrusion thinner, or the entire rest of the feature a different way. Indeed, those portions to be printed differently than originally specified are not yet printed at this point of the process. Of course, if the process measures the object 14 after the object 14 is fully formed from a single extrusion of material, then this process should end as there is no more material to add to the additive process.

As with other embodiments, in addition to measuring the line of material/ object 14 during the extrusion process, the CMM 18 also can adjust/modify printing parameters of the line of material/object 14 during the printing process. The controller 36 or other logic also may modify/alter the printing parameters specified in the CAD model, and the underlying printing processes for printing additional objects 14 in other production runs. Specifically, among other things, the controller 36 may use machine learning techniques to produce subsequent like objects 14 within the prescribed specification. For example, if the checker 38 identifies that current configurations produce a certain line of the object 14 three millimeters too wide, then step 412 may alter the underlying logic 34 and/or operating parameters to cause the printer head 32 to alter 1) its prescribed path, 2) the amount or composition of material to deposit, 3) timing of depositing certain materials, 4) etc. to reduce the width of that extrusion when forming subsequent features of the object 14, or subsequent objects 14. Accordingly, the process may form another object 14 using the updated printing parameters and updated underlying processes.

Using this feedback loop, illustrative embodiments thus detect production flaws early in the production process - not after production of several, hundreds, or thousands of objects 14. This can significantly reduce the net time to produce the objects 14, and save the cost of disposing of many out of specification items. Accordingly, among other things, the process of Figure 4 applies to objects 14 formed using multiple features of material (i.e., multiple passes of the printer head 32 between one or more vertices after a pause or discontinuity of a line of material), or objects 14 formed from a single extrusion of material (i.e., a single pass of the printer head 32 forming vertices and lines).

After completing the process, illustrative embodiments may form additional objects 14 using the modified CAD specification information. The errors captured and mitigated by the process of Figure 4 may have been the results of erroneous manufacturing assumptions, or specific requirements of the printing device 12 that could vary among like printing devices 12. Thus, using the same printing device, illustrative embodiments may print a plurality of additional objects 14 using the modified CAD specifications/printing parameters in a more efficient manner. Despite this optimization, subsequent runs of the object 14 still may measure in a manner described in Figure 4 to further optimize the object production process. Some embodiments may require some number of object printing runs to produce a plurality of additional objects 14 with minimal changes and, possibly, without further measurement during the printing process.

Illustrative embodiments may implement the system 10 using modular technologies. For example, the system 10 may include removable printer head(s) 20 and removable CMM measurement modality 26 (e.g., a removable probe). That way, the system 10 can be adapted to the task at hand. For example, as noted above, the measurement head may be configured to accept different types of measurement modalities, such as an analog tactile probe or a laser probe. Each probe type may be removable using conventional techniques, such as snap fit and other attachment techniques.

Accordingly, unlike prior art extrusion printing processes known to the inventors, illustrative embodiments permit on-the-fly changes that improve the likelihood that the printed object 14 will be closer to its specification. Moreover, logic retains these changes to produce additional objects 14 closer to the desired specification in subsequent printing runs.

Although the above discussion discloses various exemplary embodiments of the invention, it should be apparent that those skilled in the art can make various modifications as long as these modifications are within the scope of the invention as defined by the appended claims.

## Claims

1. A method of producing a three-dimensional object (14) from an extrusion of material, the method comprising:
forming, using an additive extrusion printing device (12) having a movable portion (32), at least one line of material from the movable portion of the additive extrusion printing device, extruding being a function of a nominal model having a specification of the object;
measuring, using a coordinate measuring machine (18), at least one dimension of the line of material during the extrusion process of the line of material;
checking, using a checker (38) operatively coupled with the coordinate measuring machine, the dimensional accuracy of at least one dimension of the line of material by comparing the at least one dimension with at least one object specification of the nominal model of the object; and
altering subsequent extrusion of the line of material by the movable portion of the additive extrusion printing device as a function of the dimensional accuracy of said checking the at least one measured dimension, altering comprising controlling the additive extrusion printing device to change an extrusion parameter of the line of material,
the extrusion parameter including at least one of the trajectory of the movable portion, the velocity of the movable portion, the velocity the material extrudes from the movable portion, and at least one dimension of the line of material.

2. The method as defined by claim 1 wherein said altering comprises altering subsequent extrusion of the line of material when said at least one measured dimension produces an error exceeding a prescribed threshold.

3. The method as defined by claim 1 wherein the object comprises a plurality of vertices and a plurality of lines connecting those vertices.

4. The method as defined by claim 1 wherein the coordinate measuring machine includes a measurement modality that measures the object, the measurement modality being functionally independent of the additive extrusion printing device.

5. The method as defined by claim 1 wherein the line of material is not straight.

6. The method as defined by claim 1 further comprising:
updating the specification of the nominal model to include the changed extrusion parameter of the line of material; and
producing a plurality of additional objects using the updated specification.

7. A system (10) for producing a three-dimensional object (14) from an extrusion of material, the system comprising:
an additive extrusion printing device (12) having a movable portion (32) configured to form at least one line of material the additive extrusion printing device being configured to extrude as a function of a nominal model having a specification of the object;
a coordinate measuring machine (18) configured to measure at least one dimension of the line of material during the extrusion process of the line of material;
a checker (38) operatively coupled with the coordinate measuring machine, the checker being configured to check the dimensional accuracy of at least one dimension of the line of material by comparing the at least one dimension with at least one object specification of the nominal model of the object; and
the checker being configured to alter subsequent extrusion of the line of material by the movable portion of the additive extrusion printing device as a function of the dimensional accuracy of the at least one measured dimension of the line; the checker being configured to alter subsequent extrusion of the line by controlling the additive extrusion printing device to change an extrusion parameter of the line of material,
the extrusion parameter including at least one of the trajectory of the movable portion, the velocity of the movable portion, the velocity the material extrudes from the movable portion, and at least one dimension of the line of material.

8. The system as defined by claim 7 wherein the checker is configured to alter subsequent extrusion of the line of material when the at least one measured dimension produces an error exceeding a prescribed threshold.

9. The system as defined by claim 7 wherein the coordinate measuring machine includes a measurement modality that measures the object, the measurement modality being functionally independent of the additive extrusion printing device.

10. The system as defined by claim 7 further comprising a base that is accessible to both the additive extrusion printing device and the coordinate measuring machine.

11. A computer program product for use on a computer system for producing a three-dimensional object (14) from an extrusion of material, the computer program product comprising a tangible, non-transient computer usable medium having computer readable program code thereon, the computer readable program code comprising:
program code for forming, using an additive extrusion printing device (12) having a movable portion, at least one line of material from the movable portion of the additive extrusion printing device, extruding being a function of a nominal model having a specification of the object;
program code for measuring, using a coordinate measuring machine (18), at least one dimension of the line of material during the extrusion process of the line of material;
program code for checking, using a checker (38) operatively coupled with the coordinate measuring machine, the dimensional accuracy of at least one dimension of the line of material by comparing the at least one dimension with at least one object specification of the nominal model of the object; and
program code for altering subsequent extrusion of the line of material by the movable portion of the additive extrusion printing device as a function of the dimensional accuracy of the at least one measured dimension; the program code for altering further comprising controlling the additive extrusion printing device to change an extrusion parameter of the line of material,
the extrusion parameter including at least one of the trajectory of the movable portion, the velocity of the movable portion, the velocity the material extrudes from the movable portion, and at least one dimension of the line of material.

12. The computer program product as defined by claim 11 wherein the program code for altering is configured to alter subsequent extrusion of the line of material when the at least one measured dimension produces an error exceeding a prescribed threshold.

13. The computer program product as defined by claim 11 wherein the object comprises a plurality of vertices and a plurality of lines connecting those vertices.

14. The computer program product as defined by claim 11 further comprising program code for controlling the additive extrusion printing device to extrude the line of material on another line of material formed by an earlier extrusion.

15. The computer program product as defined by claim 11 wherein the line of material is not straight.

## Patentansprüche

1. Verfahren zur Herstellung eines dreidimensionalen Objekts (14) durch Extrusion eines Materials, wobei das Verfahren Folgendes umfasst:
Bilden, unter Verwendung einer Druckvorrichtung zur additiven Extrusion (12), die einen beweglichen Abschnitt (32) aufweist, von wenigstens einer Materiallinie ausgehend von dem beweglichen Abschnitt der Druckvorrichtung zur additiven Extrusion, wobei das Extrudieren eine Funktion eines nominalen Modells ist, das eine Spezifikation des Objekts aufweist;
Messen, unter Verwendung einer Koordinatenmessmaschine (18), von wenigstens einem Maß der Materiallinie während des Prozesses der Extrusion der Materiallinie;
Prüfen, unter Verwendung einer wirkmäßig mit der Koordinatenmessmaschine gekoppelten Prüfeinrichtung (38), der Maßgenauigkeit wenigstens eines Maßes der Materiallinie, indem das wenigstens eine Maß mit wenigstens einer Objektspezifikation des nominalen Modells des Objekts verglichen wird; und
Abändern einer nachfolgenden Extrusion der Materiallinie durch den beweglichen Abschnitt der Druckvorrichtung zur additiven Extrusion als Funktion der Maßgenauigkeit der Prüfung des wenigstens einen gemessenen Maßes, wobei das Abändern das Steuern der Druckvorrichtung zur additiven Extrusion umfasst, um einen Extrusionsparameter der Materiallinie zu ändern,
wobei der Extrusionsparameter wenigstens eines aus der Bewegungsbahn des beweglichen Abschnitts, der Geschwindigkeit des beweglichen Abschnitts, der Geschwindigkeit, mit der das Material aus dem beweglichen Abschnitt extrudiert wird, und wenigstens einem Maß der Materiallinie beinhaltet.

2. Verfahren nach Anspruch 1, wobei das Abändern das Abändern einer nachfolgenden Extrusion der Materiallinie umfasst, wenn das wenigstens eine gemessene Maß einen Fehler erzeugt, der einen vorgeschriebenen Schwellenwert übersteigt.

3. Verfahren nach Anspruch 1, wobei das Objekt eine Vielzahl von Scheitelpunkten und eine Vielzahl von Linien, die diese Scheitelpunkte verbinden, umfasst.

4. Verfahren nach Anspruch 1, wobei die Koordinatenmessmaschine eine Messmodalität beinhaltet, die das Objekt misst, wobei die Messmodalität funktionell unabhängig von der Druckvorrichtung zur additiven Extrusion ist.

5. Verfahren nach Anspruch 1, wobei die Materiallinie nicht gerade ist.

6. Verfahren nach Anspruch 1, ferner umfassend:
Aktualisieren der Spezifikation des nominalen Modells, um den geänderten Extrusionsparameter der Materiallinie zu beinhalten; und
Herstellen einer Vielzahl von zusätzlichen Objekten unter Verwendung der aktualisierten Spezifikation.

7. System (10) zur Herstellung eines dreidimensionalen Objekts (14) durch Extrusion eines Materials, wobei das System Folgendes umfasst:
eine Druckvorrichtung zur additiven Extrusion (12), die einen beweglichen Abschnitt (32) aufweist, der dafür ausgelegt ist, wenigstens eine Materiallinie zu bilden, wobei die Druckvorrichtung zur additiven Extrusion ausgelegt ist, als Funktion eines nominalen Modells, das eine Spezifikation des Objekts aufweist, zu extrudieren;
eine Koordinatenmessmaschine (18), die dafür ausgelegt ist, wenigstens ein Maß der Materiallinie während des Prozesses der Extrusion der Materiallinie zu messen;
eine Prüfeinrichtung (38), die mit der Koordinatenmessmaschine wirkmäßig gekoppelt ist, wobei die Prüfeinrichtung dafür ausgelegt ist, die Maßgenauigkeit wenigstens eines Maßes der Materiallinie zu prüfen, indem das wenigstens eine Maß mit wenigstens einer Objektspezifikation des nominalen Modells des Objekts verglichen wird; und
wobei die Prüfeinrichtung dafür ausgelegt ist, eine nachfolgende Extrusion der Materiallinie durch den beweglichen Abschnitt der Druckvorrichtung zur additiven Extrusion als Funktion der Maßgenauigkeit des wenigstens einen gemessenen Maßes der Linie abzuändern; wobei die Prüfeinrichtung dafür ausgelegt ist, die nachfolgende Extrusion der Linie abzuändern, indem die Druckvorrichtung zur additiven Extrusion gesteuert wird, um einen Extrusionsparameter der Materiallinie zu ändern,
wobei der Extrusionsparameter wenigstens eines aus der Bewegungsbahn des beweglichen Abschnitts, der Geschwindigkeit des beweglichen Abschnitts, der Geschwindigkeit, mit der das Material aus dem beweglichen Abschnitt extrudiert wird, und wenigstens einem Maß der Materiallinie beinhaltet.

8. System nach Anspruch 7, wobei die Prüfeinrichtung dafür ausgelegt ist, die nachfolgende Extrusion der Materiallinie abzuändern, wenn das wenigstens eine gemessene Maß einen Fehler erzeugt, der einen vorgeschriebenen Schwellenwert übersteigt.

9. System nach Anspruch 7, wobei die Koordinatenmessmaschine eine Messmodalität beinhaltet, die das Objekt misst, wobei die Messmodalität funktionell unabhängig von der Druckvorrichtung zur additiven Extrusion ist.

10. System nach Anspruch 7, ferner umfassend eine Basis, die sowohl für die Druckvorrichtung zur additiven Extrusion als auch für die Koordinatenmessmaschine zugänglich ist.

11. Computerprogrammprodukt zur Verwendung in einem Computersystem zur Herstellung eines dreidimensionalen Objekts (14) durch Extrusion eines Materials, wobei das Computerprogrammprodukt einen materiellen, nichtflüchtigen, von einem Computer verwendbaren Datenträger umfasst, auf dem sich ein computerlesbarer Programmcode befindet, wobei der computerlesbare Programmcode Folgendes umfasst:
einen Programmcode zum Bilden, unter Verwendung einer Druckvorrichtung zur additiven Extrusion (12), die einen beweglichen Abschnitt aufweist, von wenigstens einer Materiallinie ausgehend von dem beweglichen Abschnitt der Druckvorrichtung zur additiven Extrusion, wobei das Extrudieren eine Funktion eines nominalen Modells ist, das eine Spezifikation des Objekts aufweist;
einen Programmcode zum Messen, unter Verwendung einer Koordinatenmessmaschine (18), wenigstens eines Maßes der Materiallinie während des Prozesses der Extrusion der Materiallinie;
einen Programmcode zum Prüfen, unter Verwendung einer wirkmäßig mit der Koordinatenmessmaschine gekoppelten Prüfeinrichtung (38), der Maßgenauigkeit wenigstens eines Maßes der Materiallinie, indem das wenigstens eine Maß mit wenigstens einer Objektspezifikation des nominalen Modells des Objekts verglichen wird; und
einen Programmcode zum Abändern einer nachfolgenden Extrusion der Materiallinie durch den beweglichen Abschnitt der Druckvorrichtung zur additiven Extrusion als Funktion der Maßgenauigkeit des wenigstens einen gemessenen Maßes; wobei der Programmcode zum Abändern ferner das Steuern der Druckvorrichtung zur additiven Extrusion umfasst, um einen Extrusionsparameter der Materiallinie zu ändern,
wobei der Extrusionsparameter wenigstens eines aus der Bewegungsbahn des beweglichen Abschnitts, der Geschwindigkeit des beweglichen Abschnitts, der Geschwindigkeit, mit der das Material aus dem beweglichen Abschnitt extrudiert wird, und wenigstens einem Maß der Materiallinie beinhaltet.

12. Computerprogrammprodukt nach Anspruch 11, wobei der Programmcode zum Abändern dafür ausgelegt ist, die nachfolgende Extrusion der Materiallinie abzuändern, wenn das wenigstens eine gemessene Maß einen Fehler erzeugt, der einen vorgeschriebenen Schwellenwert übersteigt.

13. Computerprogrammprodukt nach Anspruch 11, wobei das Objekt eine Vielzahl von Scheitelpunkten und eine Vielzahl von Linien, die diese Scheitelpunkte verbinden, umfasst.

14. Computerprogrammprodukt nach Anspruch 11, ferner umfassend einen Programmcode zum Steuern der Druckvorrichtung zur additiven Extrusion, um die Materiallinie auf einer anderen Materiallinie zu extrudieren, die durch eine frühere Extrusion gebildet wurde.

15. Computerprogrammprodukt nach Anspruch 11, wobei die Materiallinie nicht gerade ist.

## Revendications

1. Procédé de fabrication d'un objet tridimensionnel (14) à partir d'une extrusion de matière, le procédé comprenant :
la formation, en utilisant un dispositif d'impression additive par extrusion (12) qui a une portion mobile, au moins une bande de matière provenant de la portion mobile du dispositif d'impression additive par extrusion, l'extrusion étant une fonction d'un modèle nominal qui a une spécification de l'objet ;
la mesure, en utilisant une machine de mesure de coordonnées (18), d'au moins une dimension de la bande de matière pendant le processus d'extrusion de la bande de matière ;
le contrôle, en utilisant un vérificateur (28) couplé fonctionnellement à la machine de mesure de coordonnées, la précision dimensionnelle d'au moins une dimension de la bande de matière en comparant la au moins une dimension à au moins une spécification d'objet du modèle nominal de l'objet et
la modification d'une extrusion subséquente de la bande de matière par la portion mobile du dispositif d'impression additive par extrusion comme fonction de la précision dimensionnelle dudit contrôle de la au moins une dimension mesurée, la modification comprenant le contrôle du dispositif d'impression additive par extrusion pour changer un paramètre d'extrusion de la bande de matière,
le paramètre d'extrusion comprenant au moins l'un des éléments la trajectoire de la portion mobile, la vitesse de la portion mobile, la vitesse de la matière extrudée par la portion mobile et au moins une dimension de la bande de matière.

2. Procédé selon la revendication 1, ladite modification comprenant la modification de l'extrusion subséquente de la bande de matière lorsque ladite au moins une dimension mesurée produit une erreur qui dépasse un seuil prescrit.

3. Procédé selon la revendication 1, l'objet comprenant une pluralité de sommets et une pluralité de lignes qui relient ces sommets.

4. Procédé selon la revendication 1, la machine de mesure de coordonnées comprenant une modalité de mesure qui mesure l'objet, la modalité de mesure étant fonctionnellement indépendante du dispositif d'impression additive par extrusion.

5. Procédé selon la revendication 1, la bande de matière n'étant pas droite.

6. Procédé selon la revendication 1 comprenant de plus :
la mise à jour de la spécification du modèle nominal pour inclure le paramètre modifié d'extrusion de la bande de matière et
la production d'une pluralité d'objets supplémentaires qui utilisent la spécification mise à jour.

7. Système (10) pour fabriquer un objet tridimensionnel (14) à partir d'une extrusion de matière, le système comprenant :
un dispositif d'impression additive par extrusion (12) qui a une portion mobile (32) configurée pour former au moins une bande de matière, le dispositif d'impression additive par extrusion étant configuré pour extruder en fonction d'un modèle nominal qui a une spécification de l'objet;
une machine de mesure de coordonnées (18) configurée pour mesurer au moins une dimension de la bande de matière pendant le processus d'extrusion de la bande de matière ;
un vérificateur (38) couplé fonctionnellement à la machine de mesure de coordonnées, le vérificateur étant configuré pour contrôler la précision dimensionnelle d'au moins une dimension de la bande de matière en comparant la au moins une dimension à au moins une spécification d'objet du modèle nominal de l'objet et
le vérificateur étant configuré pour modifier une extrusion subséquente de la bande de matière par la portion mobile du dispositif d'impression additive par extrusion comme fonction de la précision dimensionnelle de la au moins une dimension mesurée de la bande, le vérificateur étant de plus configuré pour modifier l'extrusion subséquente de la bande en contrôlant le dispositif d'impression additive par extrusion pour changer un paramètre d'extrusion de la bande de matière,
le paramètre d'extrusion comprenant au moins l'un des éléments la trajectoire de la portion mobile, la vitesse de la portion mobile, la vitesse de la matière extrudée par la portion mobile et au moins une dimension de la bande de matière.

8. Système selon la revendication 7, le vérificateur étant configuré pour modifier l'extrusion subséquente de la bande de matière lorsque la au moins une dimension mesurée produit une erreur qui dépasse un seuil prescrit.

9. Système selon la revendication 7, la machine de mesure de coordonnées comprenant une modalité de mesure qui mesure l'objet, la modalité de mesure étant fonctionnellement indépendante du dispositif d'impression additive par extrusion.

10. Système selon la revendication 7 comprenant de plus une base qui est accessible à la fois au dispositif d'impression additive par extrusion et à la machine de mesure de coordonnées.

11. Produit programme d'ordinateur pour utilisation sur un système informatique pour fabriquer un objet tridimensionnel (14) à partir d'une extrusion de matière, le produit programme d'ordinateur comprenant un support informatique tangible, non transitoire, ayant un code de programme lisible par ordinateur sur celui-ci, le code de programme lisible par ordinateur comprenant :
un code de programme pour former, en utilisant un dispositif d'impression additive par extrusion (12) qui a une portion mobile, au moins une bande de matière provenant de la portion mobile du dispositif d'impression additive par extrusion, l'extrusion étant une fonction d'un modèle nominal qui a une spécification de l'objet ;
un code de programme pour mesurer, en utilisant une machine de mesure de coordonnées (18), d'au moins une dimension de la bande de matière pendant le processus d'extrusion de la bande de matière ;
un code de programme pour contrôler, en utilisant un vérificateur (28) couplé fonctionnellement à la machine de mesure de coordonnées, la précision dimensionnelle d'au moins une dimension de la bande de matière en comparant la au moins une dimension à au moins une spécification d'objet du modèle nominal de l'objet et
un code de programme pour modifier une extrusion subséquente de la bande de matière par la portion mobile du dispositif d'impression additive par extrusion comme fonction de la précision dimensionnelle dudit contrôle de la au moins une dimension mesurée, la modification comprenant le contrôle du dispositif d'impression additive par extrusion pour changer un paramètre d'extrusion de la bande de matière,
le paramètre d'extrusion comprenant au moins l'un des éléments la trajectoire de la portion mobile, la vitesse de la portion mobile, la vitesse de la matière extrudée par la portion mobile et au moins une dimension de la bande de matière.

12. Produit programme d'ordinateur selon la revendication 11, le code de programme pour modifier étant configuré pour modifier l'extrusion subséquente de la bande de matière lorsque la au moins une dimension mesurée produit une erreur qui dépasse un seuil prescrit.

13. Produit programme d'ordinateur selon la revendication 11, l'objet comprenant une pluralité de sommets et une pluralité de lignes qui relient ces sommets.

14. Produit programme d'ordinateur selon la revendication 11 comprenant de plus un code de programme pour contrôler le dispositif d'impression additive par extrusion pour extruder la bande de matière sur une autre bande de matière formée par une extrusion antérieure.

15. Produit programme d'ordinateur selon la revendication 11, la bande de matière n'étant pas droite.
